# EUROPEAN PATENT APPLICATION

(11) **EP 4 851 235 A1**
(43) Date of publication of application: **09.12.2026**
(21) Application number: 25748141.6
(22) Date of filing: 27.01.2025
(51) Int. Cl.: C08J 9/04, C08L 25/12, C08L 25/16, C08L 27/06, C08L 27/24, C08L 33/04

(54) **VINYL CHLORIDE RESIN COMPOSITION FOR EXTRUDED FOAM MOLDED BODY AND EXTRUDED FOAM MOLDED BODY**

(30) Priority: 31.01.2024 JP 2024012990
(71) Applicant: KANEKA CORPORATION, Osaka-shi, Osaka 530-8288 (JP)
(72) Inventor: INATANI, Bunyu, Takasago-shi, Hyogo 676-8688 (JP)
(74) Representative: Vossius & Partner Patentanwälte Rechtsanwälte mbB
(86) International application number: PCT/JP2025/002367
(87) International publication number: WO 2025/164559

(57) **Abstract**

Provided is a vinyl chloride-based resin composition capable of providing an extruded foam that has a high expansion ratio, the vinyl chloride-based resin composition including a vinyl chloride-based resin (A), a copolymer (B) containing 20% by weight to 85% by weight of α-methylstyrene units, a processing aid (C) that contains (i) a (meth)acrylic polymer and/or (ii) a copolymer having aromatic vinyl units and unsaturated nitrile units and that has a specific weight average molecular weight, and a blowing agent (D), in respective specific amounts.

## Description

### Technical Field

The present invention relates to a vinyl chloride-based resin composition for an extrusion-foamed molded product, and an extrusion-foamed molded product.

### Background Art

A vinyl chloride-based resin is known to have excellent flame-retardant properties. Conventionally, a vinyl chloride-based resin extruded foam using a vinyl chloride-based resin as a base resin has been known (e.g., Patent Literature 1).

Further, as a thermoplastic resin composition for foam molding, the thermoplastic resin composition being for obtaining an extrusion-foamed molded product, a composition containing a styrene-based resin and a blowing agent has been known (e.g., Patent Literatures 2 and 3).

### Citation List

### [Patent Literature]

[Patent Literature 1]
   Japanese Patent Application Publication Tokukaihei No. 7-3066
[Patent Literature 2]
   Japanese Patent Application Publication Tokukai No. 2008-150476
[Patent Literature 3]
   Japanese Patent Application Publication Tokukai No. 2009-91553

### Summary of Invention

### Technical Problem

However, from the viewpoint of obtaining an extruded foam having a high expansion ratio, the conventional techniques as described above are not sufficient and have room for further improvement.

An embodiment of the present invention has been made in view of the above problem, and an object of the present invention is to provide a novel vinyl chloride-based resin composition capable of providing an extruded foam having a high expansion ratio.

### Solution to Problem

As a result of diligent studies to solve the above problem, the inventors of the present invention have accomplished the present invention.

In accordance with an embodiment of the present invention, a vinyl chloride-based resin composition for an extrusion-foamed molded product includes:
a vinyl chloride-based resin (A);
a copolymer (B);
a processing aid (C); and
a blowing agent (D),
the copolymer (B) contains 20% by weight to 85% by weight of α-methylstyrene units as a structural unit with respect to 100% by weight of the copolymer (B), and has a glass transition temperature of not less than 90°C,
the copolymer (B) is contained in an amount of 5.0 parts by weight to 75.0 parts by weight with respect to a total of 100 parts by weight of the vinyl chloride-based resin (A) and the copolymer (B),
the processing aid (C) contains (i) a (meth)acrylic polymer and/or (ii) a copolymer having aromatic vinyl units and unsaturated nitrile units as structural units,
the processing aid (C) has a weight average molecular weight of 1,500,000 to 8,000,000, and
the processing aid (C) is contained in an amount of 5.0 parts by weight to 30.0 parts by weight with respect to a total of 100 parts by weight of the vinyl chloride-based resin (A) and the copolymer (B).

### Advantageous Effects of Invention

An embodiment of the present invention exhibits an advantageous effect of making it possible to provide a novel vinyl chloride-based resin composition capable of providing an extruded foam having a high expansion ratio.

### Description of Embodiments

The following description will discuss embodiments of the present invention. The present invention is not, however, limited to these embodiments. The present invention is not limited to configurations described below, but may be altered in various ways within the scope of the claims. The present invention also encompasses, in its technical scope, any embodiments or Examples derived by combining technical means disclosed in differing embodiments and Examples. Further, it is possible to form a new technical feature by combining the technical means disclosed in the respective embodiments. Note that all academic and patent documents cited in the present specification are incorporated herein by reference. Furthermore, any numerical range expressed as "A to B" herein means "not less than A and not more than B (i.e., a range from A to B which includes both A and B)" unless otherwise stated.

In the present specification, a "structural unit derived from X monomer" contained in a polymer, copolymer, or resin can be referred to as an "X unit".

Further, unless otherwise specified in the present specification, a copolymer containing, as structural units, X¹ units, X² units, ..., and Xⁿ units (n is an integer of not less than 2) may also be referred to as an "X¹/X²/.../Xⁿ copolymer". Unless explicitly stated, the X¹/X²/.../Xⁿ copolymer is not limited to a particular polymerization mode, but may be a random copolymer, may be a block copolymer, may be an alternating copolymer, or may be a graft copolymer.

In the present specification, the "vinyl chloride-based resin composition for an extrusion-foamed molded product" can also be referred to as a "vinyl chloride-based resin composition" or simply as a "composition". In the present specification, the "vinyl chloride-based resin composition for an extrusion-foamed molded product in accordance with an embodiment of the present invention" may also be referred to as "the present composition". In the present specification, the "extrusion-foamed molded product in accordance with an embodiment of the present invention" can also be referred to as "the present extrusion-foamed molded product".

### [1. Vinyl chloride-based resin composition]

A vinyl chloride-based resin composition for an extrusion-foamed molded product in accordance with an embodiment of the present invention includes a vinyl chloride-based resin (A), a copolymer (B), a processing aid (C), and a blowing agent (D), the copolymer (B) containing 20% by weight to 85% by weight of α-methylstyrene units as a structural unit with respect to 100% by weight of the copolymer (B) and having a glass transition temperature of not less than 90°C, the copolymer (B) being contained in an amount of 5.0 parts by weight to 75.0 parts by weight with respect to a total of 100 parts by weight of the vinyl chloride-based resin (A) and the copolymer (B), the processing aid (C) containing (i) a (meth)acrylic polymer and/or (ii) a copolymer having aromatic vinyl units and unsaturated nitrile units as structural units, the processing aid (C) having a weight average molecular weight of 1,500,000 to 8,000,000, the processing aid (C) being contained in an amount of 5.0 parts by weight to 30.0 parts by weight with respect to a total of 100 parts by weight of the vinyl chloride-based resin (A) and the copolymer (B).

As a result of having the configuration described above, the present composition has the advantage of being able to provide an extruded foam having a high expansion ratio.

### (Vinyl chloride-based resin (A))

The vinyl chloride-based resin (A) is not particularly limited provided that the vinyl chloride-based resin (A) is a polymer or a copolymer obtained using a vinyl chloride-based monomer. In other words, the vinyl chloride-based resin (A) is not particularly limited provided that the vinyl chloride-based resin (A) contains a vinyl chloride-based unit.

Examples of the vinyl chloride-based resin (A) include (a) a homopolymer of vinyl chloride and (b) a copolymer of (i) vinyl chloride and (ii) another monomer copolymerizable with vinyl chloride. Examples of the other monomer copolymerizable with vinyl chloride include ethylene, propylene, vinyl acetate, allyl chloride, allyl glycidyl ether, acrylic acid ester, and vinyl ether. For the other monomer copolymerizable with vinyl chloride, one type may be used alone, or two or more types may be used in combination.

The vinyl chloride-based resin (A) preferably contains not less than 50% by weight of vinyl chloride-based units, more preferably more than 50% by weight of vinyl chloride-based units, more preferably not less than 60% by weight of vinyl chloride-based units, more preferably not less than 70% by weight of vinyl chloride-based units, more preferably not less than 80% by weight of vinyl chloride-based units, still more preferably not less than 90% by weight of vinyl chloride-based units, and particularly preferably not less than 95% by weight of vinyl chloride-based units, with respect to 100% by weight of the resin. The vinyl chloride-based resin (A) may contain 100% by weight of vinyl chloride-based units with respect to 100% by weight of the resin. In other words, the vinyl chloride-based resin (A) may be composed only of vinyl chloride-based units and may, for example, be a homopolymer of vinyl chloride. In the present specification, the "vinyl chloride-based unit" also encompasses a "chlorinated vinyl chloride unit" obtained by chlorinating a vinyl chloride unit.

The average degree of polymerization of the vinyl chloride-based resin (A) is not particularly limited. The average degree of polymerization of the vinyl chloride-based resin (A) is preferably 400 to 1300, more preferably 450 to 1200, more preferably 500 to 1000, still more preferably 530 to 900, and particularly preferably 550 to 800. As a result of such a configuration, an extrusion-foamed molded product having a high expansion ratio tends to be obtained. The average degree of polymerization of the vinyl chloride-based resin (A) is a value measured in accordance with JIS K6720-2.

The vinyl chloride-based resin (A) also encompasses a chlorinated vinyl chloride-based resin obtained by chlorinating (a) a homopolymer of vinyl chloride and/or (b) a copolymer of (i) vinyl chloride and (ii) another monomer copolymerizable with vinyl chloride. From the viewpoint of cell retainability during extrusion foaming molding, the vinyl chloride-based resin (A) preferably contains a chlorinated vinyl chloride-based resin.

The chlorinated vinyl chloride-based resin is typically produced using, as a raw material, the various vinyl chloride-based resins described above and using methods such as the following methods (a) and (b): (a) a method of chlorinating in an aqueous medium, such as a method in which chlorine is supplied into the aqueous medium while the vinyl chloride-based resin is dispersed in the aqueous medium, and (i) the resulting mixture is photochlorinated by irradiation with a mercury lamp or (ii) the resulting mixture is thermally chlorinated; and (b) a method of performing chlorination in a gas phase, such as a method in which the vinyl chloride-based resin is chlorinated in a gas phase under irradiation with a mercury lamp.

The average degree of polymerization of the chlorinated vinyl chloride-based resin is regarded as being substantially the same as the average degree of polymerization of the vinyl chloride-based resin before chlorination.

Since the resulting composition has favorable foamability, the chlorine content of the chlorinated vinyl chloride-based resin is preferably 60% by weight to 75% by weight, and more preferably 64% by weight to 70% by weight. As the chlorine content of the chlorinated vinyl chloride-based resin increases, an extrusion-foamed molded product having a high expansion ratio tends to be obtained. As the chlorine content of the chlorinated vinyl chloride-based resin decreases, the melt viscosity of the present composition decreases, and therefore processability during extrusion tends to become favorable. The chlorine content of the chlorinated vinyl chloride-based resin and the chlorine content of the vinyl chloride-based resin are measured in accordance with JIS K7385 Method B.

In an embodiment of the present invention, as the vinyl chloride-based resin (A), only one selected from the group consisting of the various vinyl chloride-based resins described above and the various chlorinated vinyl chloride-based resins obtained by chlorinating the various vinyl chloride-based resins described above may be used, or two or more selected from said group may be used in combination.

The content of the vinyl chloride-based resin (A) in the present composition is not particularly limited. The content of the vinyl chloride-based resin (A) in the present composition is preferably 10.0 parts by weight to 70.0 parts by weight, more preferably 15.0 parts by weight to 65.0 parts by weight, still more preferably 18.0 parts by weight to 62.0 parts by weight, and particularly preferably 20.0 parts by weight to 60.0 parts by weight, with respect to 100 parts by weight of the present composition. When the content of the vinyl chloride-based resin (A) with respect to 100 parts by weight of the present composition is not less than 10.0 parts by weight, the present composition has the advantage of having an excellent balance between cost and foaming properties. When the content of the vinyl chloride-based resin (A) with respect to 100 parts by weight of the present composition is not more than 70.0 parts by weight, the present composition has the advantage of having an excellent balance between fluidity and foamability during extrusion foaming molding.

### (Copolymer (B))

The copolymer (B) contains 20% by weight to 85% by weight of α-methylstyrene units as a structural unit with respect to 100% by weight of the copolymer (B) and has a glass transition temperature (hereinafter, also referred to as "Tg") of not less than 90°C. The copolymer (B) can have the function of increasing the Tg of the composition. In the course of the diligent studies, the inventor of the present invention has independently obtained a finding that, by increasing the Tg of the composition, an extruded foam having a high expansion ratio can be obtained from the composition. That is, as a result of including the copolymer (B), the present composition has the advantage of being able to provide an extruded foam having a high expansion ratio.

The copolymer (B) preferably contains 20% by weight to 85% by weight of α-methylstyrene units, more preferably 25% by weight to 80% by weight, more preferably 30% by weight to 80% by weight, more preferably 35% by weight to 75% by weight, more preferably 40% by weight to 75% by weight, more preferably 45% by weight to 75% by weight, more preferably 50% by weight to 75% by weight, still more preferably 55% by weight to 75% by weight, and particularly preferably 60% by weight to 75% by weight, with respect to 100% by weight of the copolymer (B). As a result of such a configuration, the present composition has the advantage of excellent cell retainability during extrusion foaming molding. Further, since the copolymer (B) contains not less than 20% by weight of α-methylstyrene units with respect to 100% by weight of the copolymer (B), the copolymer (B) also has an advantage in that compatibility with the vinyl chloride-based resin (A) is favorable (compatibility is easily achieved). As a result, the copolymer (B) has the advantage of easily increasing the Tg of the composition.

The copolymer (B) may contain, as structural units other than α-methylstyrene units, structural units derived from a monomer other than α-methylstyrene, the monomer being copolymerizable with α-methylstyrene. Examples of the monomer other than α-methylstyrene, the monomer being copolymerizable with α-methylstyrene, include an aromatic vinyl monomer other than α-methylstyrene, a conjugated diene monomer, an unsaturated nitrile monomer, and a (meth)acrylic monomer. As the monomer other than α-methylstyrene, one type may be used alone, or two or more types may be used in combination.

Examples of the aromatic vinyl monomer other than α-methylstyrene include (i) styrene, and (ii) styrene derivatives other than α-methylstyrene, such as ethylstyrene, p-methylstyrene, and halogenated styrene. Examples of the halogenated styrene include monobromostyrene, dibromostyrene, tribromostyrene, and chlorostyrene.

Examples of the conjugated diene monomer include 1,3-butadiene, isoprene (also known as 2-methyl-1,3-butadiene), and 2-chloro-1,3-butadiene.

Examples of the unsaturated nitrile monomer include acrylonitrile and methacrylonitrile.

Examples of the (meth)acrylic monomer include (i) (meth)acrylic acid; (ii) alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; (iii) aromatic ring-containing (meth)acrylates such as phenoxyethyl (meth)acrylate and benzyl (meth)acrylate; (iv) hydroxyalkyl (meth)acrylates; (v) glycidyl (meth)acrylates such as glycidyl (meth)acrylate and glycidyl alkyl (meth)acrylate; (vi) alkoxyalkyl (meth)acrylates; (vii) allyl alkyl (meth)acrylates such as allyl (meth)acrylate and allyl alkyl (meth)acrylate; and (viii) multifunctional (meth)acrylates such as monoethylene glycol di(meth)acrylate, triethylene glycol di(meth)acrylate, and tetraethylene glycol di(meth)acrylate. In the present specification, "(meth)acryl" is intended to mean "methacryl and/or acryl". That is, in the present specification, "(meth)acrylic acid" is intended to mean "acrylic acid and/or methacrylic acid," and "(meth)acrylate" is intended to mean "acrylate and/or methacrylate". For example, "methyl (meth)acrylate" is intended to mean "methyl acrylate and/or methyl methacrylate".

The glass transition temperature of the copolymer (B) is not less than 90°C. When the glass transition temperature of the copolymer (B) is not less than 90°C, the present composition has the advantage of making it possible to provide an extruded foam having a high expansion ratio. From the viewpoint of cell retainability during extrusion foaming molding, the glass transition temperature of the copolymer (B) is preferably not less than 95°C, more preferably not less than 100°C, more preferably not less than 105°C, more preferably not less than 110°C, more preferably not less than 115°C, still more preferably not less than 120°C, and particularly preferably not less than 125°C.

When monomers used for production of a polymer are known, the glass transition temperature (Tg) of the polymer can be calculated by the FOX equation (Formula 1) below: $1 / Tg = {w}_{1} {/ Tg}_{1} + {w}_{2} {/ Tg}_{2} + ⋯ + {w}_{n} {/ Tg}_{n}$ (Formula 1); where Tg₁, Tg₂, ..., and Tgₙ are the respective Tg (K) values of the homopolymers of components 1, 2, ..., and n (i.e., monomers used for production of the polymer) constituting the polymer, and w₁, w₂, ..., and wₙ are the respective weight fractions of components 1, 2, ..., and n (i.e., monomers used for production of the polymer) constituting the polymer. Further, for the Tg of a homopolymer, for example, numerical values, etc. described in Polymer Handbook Fourth Edition, by J. Brand, published by Wiley in 1998, can be used. Further, the Tg of the polymer may be a value calculated by differential thermal analysis or differential scanning calorimetry.

The content of the copolymer (B) in the present composition is 5.0 parts by weight to 75.0 parts by weight with respect to a total of 100 parts by weight of the vinyl chloride-based resin (A) and the copolymer (B). When the content of the copolymer (B) is not less than 5.0 parts by weight with respect to a total of 100 parts by weight of the vinyl chloride-based resin (A) and the copolymer (B), the present composition has the advantage of having excellent cell retainability during extrusion foaming molding. When the content of the copolymer (B) is not more than 75.0 parts by weight with respect to a total of 100 parts by weight of the vinyl chloride-based resin (A) and the copolymer (B), the present composition has the advantage of making it possible to obtain a suitable melt viscosity during extrusion foaming molding. Since such advantages can be further obtained, the content of the copolymer (B) in the present composition is more preferably 10.0 parts by weight to 70.0 parts by weight, more preferably 15.0 parts by weight to 65.0 parts by weight, still more preferably 20.0 parts by weight to 63.0 parts by weight, and particularly preferably 22.0 parts by weight to 60.0 parts by weight, with respect to a total of 100 parts by weight of the vinyl chloride-based resin (A) and the copolymer (B).

The content of the copolymer (B) in the present composition is preferably 3.0 parts by weight to 65.0 parts by weight, more preferably 5.0 parts by weight to 60.0 parts by weight, more preferably 10.0 parts by weight to 55.0 parts by weight, still more preferably 15.0 parts by weight to 50.0 parts by weight, and particularly preferably 17.0 parts by weight to 47.0 parts by weight, with respect to 100 parts by weight of the present composition. When the content of the copolymer (B) with respect to 100 parts by weight of the present composition is not less than 3.0 parts by weight, the present composition has the advantage of having excellent cell retainability during extrusion foaming molding. When the content of the copolymer (B) with respect to 100 parts by weight of the present composition is not more than 65.0 parts by weight, the present composition has the advantage of making it possible to obtain a suitable melt viscosity during extrusion foaming molding.

### (Method for producing copolymer (B))

A method for producing the copolymer (B), in other words, a polymerization method for obtaining the copolymer (B), is not particularly limited, and a known method can be used. As the polymerization method for obtaining the copolymer (B), for example, bulk polymerization, solution polymerization, suspension polymerization, emulsion polymerization, and the like can be employed, and emulsion polymerization is preferably employed.

Examples of the emulsifier (dispersant) which can be used in emulsion polymerization include, but are not particularly limited to, anionic surfactants, nonionic surfactants, cationic surfactants, amphoteric surfactants, and the like. Further, as the emulsifier (dispersant), a dispersant such as polyvinyl alcohol, alkyl-substituted cellulose, polyvinyl pyrrolidone, and/or a polyacrylic acid derivative may be used. For the emulsifier (dispersant), one type may be used alone, or two or more types may be used in combination.

In a case where an emulsion polymerization method is employed, a thermally decomposable initiator can be used as a radical polymerization initiator. Examples of the thermally decomposable initiator include known initiators such as 2,2'-azobisisobutyronitrile, hydrogen peroxide, potassium persulfate, and ammonium persulfate.

A redox initiator can also be used as the radical polymerization initiator. The redox initiator is an initiator that contains a combination of (a) a peroxide(s) such as an organic peroxide and/or an inorganic peroxide and (b) a reducing agent(s) such as sodium formaldehyde sulfoxylate and/or glucose as necessary, a transition metal salt such as iron (II) sulfate as necessary, a chelating agent such as disodium ethylenediaminetetraacetate as necessary, and/or a phosphorus-containing compound such as sodium pyrophosphate as necessary. Examples of the organic peroxide include t-butylperoxy isopropyl carbonate, paramenthane hydroperoxide, cumene hydroperoxide, dicumyl peroxide, t-butyl hydroperoxide, di-t-butyl peroxide, and t-hexyl peroxide. Examples of the inorganic peroxide include hydrogen peroxide, potassium persulfate, and ammonium persulfate. For each of the peroxide, the reducing agent, the transition metal salt, the chelating agent, and the phosphorus-containing compound, one type may be used alone, or two or more types may be used in combination.

Using a redox-type initiator makes it possible to (i) carry out polymerization even at a low temperature at which pyrolysis of the peroxide substantially does not occur, and (ii) select the polymerization temperature from a wide range of temperatures. Therefore, it is preferable to use a redox initiator. Among redox initiators, a redox-type initiator using, as a peroxide, an organic peroxide such as cumene hydroperoxide, dicumyl peroxide, paramenthane hydroperoxide, and t-butyl hydroperoxide is preferable. The amount of the initiator used can be within a known range. In a case where a redox initiator is used, the amounts of e.g. the reducing agent, the transition metal salt, and the chelating agent used can be each within a known range.

In the polymerization for producing the copolymer (B), a known surfactant and a chain transfer agent can also be used.

When the copolymer (B) is produced by emulsion polymerization, a latex (e.g., an aqueous latex) containing the copolymer (B) can be obtained. By separating the copolymer (B) from the latex containing the copolymer (B), the copolymer (B) can be obtained. A method for separating the copolymer (B) from the latex containing the copolymer (B) is not particularly limited, and examples of the method include salting-out of the copolymer (B) using an acid and a metal salt, and precipitation of the copolymer (B) using an organic solvent. The copolymer (B) separated from the latex containing the copolymer (B) may be washed and may further be dried. By separating the copolymer (B) from the latex containing the copolymer (B), washing the copolymer (B), and further drying the copolymer (B), a powdery substance (also referred to as a "powder") of the copolymer (B) can be obtained. The powdery substance of the copolymer (B) can also be obtained by spraydrying the latex containing the copolymer (B).

### (Carrier (B))

The copolymer (B) may be produced together with a polymer other than the copolymer (B) in order to improve granulability during the production. In the present specification, the "polymer other than the copolymer (B), the polymer being produced together with the copolymer (B) in order to improve granulability of the copolymer (B)", may also be referred to as a "carrier (B)".

The carrier (B) is not particularly limited, but a (meth)acrylic polymer obtained by polymerizing a (meth)acrylic monomer is suitably used.

### (Composite (B))

A case in which the copolymer (B) is produced together with the carrier (B) (hereinafter, also referred to as "Case A") is described here. In Case A, after the copolymer (B) is obtained by polymerization, the carrier (B) is preferably obtained by polymerization in the presence of the copolymer (B). In Case A, when the copolymer (B) is obtained by, for example, emulsion polymerization, production (polymerization) of the carrier (B) is particularly preferably carried out in the latex containing the copolymer (B) after production (polymerization) of the copolymer (B). When production (polymerization) of the carrier (B) is carried out in the latex containing the copolymer (B), a composite containing the copolymer (B) and the carrier (B) (or consisting of the copolymer (B) and the carrier (B)) can be obtained. In the composite, the carrier (B) preferably exists outside the copolymer (B) and exists so as to cover at least a part of the copolymer (B). In the composite, the carrier (B) may cover the whole of the copolymer (B), or the copolymer (B) in the form of particles may be impregnated with the carrier (B). In the composite, the copolymer (B) and the carrier (B) are preferably not chemically bonded to each other. In the present specification, a "composite containing the copolymer (B) and the carrier (B) (or consisting of the copolymer (B) and the carrier (B))" may also be referred to as a "composite (B)".

In Case A, the present composition may further include the carrier (B). When the present composition further contains the carrier (B), the weight average molecular weight of the composite (B) containing the copolymer (B) and the carrier (B) is not particularly limited, but is preferably 20,000 to 800,000, more preferably 25,000 to 400,000, more preferably 50,000 to 250,000, still more preferably 60,000 to 200,000, and particularly preferably 65,000 to 130,000. When the present composition further includes the carrier (B) and the weight average molecular weight of the composite (B) is not less than 20,000, the present composition has an advantage in that cell retainability during extrusion foaming molding is excellent. When the present composition further includes the carrier (B) and the weight average molecular weight of the composite (B) is not more than 800,000, the present composition has an advantage in that dispersibility of the composite (B) (i.e., the copolymer (B)) in the present composition is favorable. When the present composition further includes the carrier (B), the weight average molecular weight of the composite (B) may be less than 1,500,000 or may be more than 8,000,000. In the present specification, methods for measuring weight average molecular weights of the resin, the polymer, the copolymer, or the composite are described in detail in [Examples] below.

When the copolymer (B) is not produced together with the carrier (B) and the copolymer (B) alone is produced, the present composition does not include the carrier (B). When the present composition does not include the carrier (B), the weight average molecular weight of the copolymer (B) is not particularly limited, but is preferably 20,000 to 800,000, more preferably 25,000 to 400,000, more preferably 50,000 to 250,000, still more preferably 60,000 to 200,000, and particularly preferably 65,000 to 130,000. When the present composition does not include the carrier (B) and the weight average molecular weight of the copolymer (B) is not less than 20,000, the present composition has an advantage in that cell retainability during extrusion foaming molding is excellent. When the present composition does not include the carrier (B) and the weight average molecular weight of the copolymer (B) is not more than 800,000, the present composition has an advantage in that the dispersibility of the copolymer (B) in the present composition is favorable. When the present composition does not include the carrier (B), the weight average molecular weight of the copolymer (B) may be less than 1,500,000 or may be more than 8,000,000.

In an embodiment of the present invention, the copolymer (B) may be a copolymer that (i) contains 20% by weight to 85% by weight of α-methylstyrene units as a structural unit with respect to 100% by weight of the copolymer, (ii) has a Tg of not less than 90°C, and (iii) has a weight average molecular weight of less than 1,500,000 or more than 8,000,000.

### (Processing aid (C))

The processing aid (C) contains (i) a (meth)acrylic polymer and/or (ii) a copolymer having aromatic vinyl units and unsaturated nitrile units as structural units. The processing aid (C) may be composed only of a (meth)acrylic polymer and/or (ii) a copolymer having aromatic vinyl units and unsaturated nitrile units as structural units. The processing aid (C) has a weight average molecular weight of 1,500,000 to 8,000,000. The processing aid (C) can have the function of increasing melt tension of the composition, the melt tension being a parameter that can be important for foam molding of the composition. That is, as a result of including both the copolymer (B) capable of increasing Tg and the processing aid (C) capable of increasing melt tension, the present composition has the advantage of being able to provide an extruded foam having a high expansion ratio.

### ((Meth)acrylic polymer)

In the present specification, the "(meth)acrylic polymer" means a resin in which the content of (meth)acrylic units derived from a (meth)acrylic monomer is highest of all the structural units constituting the resin. For example, the (meth)acrylic polymer contains more than 50% by weight of (meth)acrylic units with respect to 100% by weight of the polymer. The (meth)acrylic polymer contains (meth)acrylic units in an amount of preferably not less than 60% by weight, preferably not less than 70% by weight, preferably not less than 80% by weight, still more preferably not less than 90% by weight, and particularly preferably not less than 95% by weight, with respect to 100% by weight of the polymer. The (meth)acrylic polymer may contain 100% by weight of (meth)acrylic units with respect to 100% by weight of the polymer. In other words, the (meth)acrylic polymer may be composed only of (meth)acrylic units.

Examples of the (meth)acrylic monomer are the same as those described in the section of (Copolymer (B)); therefore, the description is employed, and the description thereof is omitted here. For the (meth)acrylic monomer, one type may be used alone, or two or more types may be used in combination.

### (Copolymer having aromatic vinyl units and unsaturated nitrile units as structural units)

In the present specification, the "copolymer having aromatic vinyl units and unsaturated nitrile units as structural units" in the processing aid (C) is also referred to as a "copolymer (C)".

The copolymer (C) is not particularly limited, but examples thereof include a copolymer containing a total of more than 50% by weight of aromatic vinyl units and unsaturated nitrile units with respect to 100% by weight of the copolymer.

Examples of the aromatic vinyl monomer from which the aromatic vinyl units are derived include (i) styrene and (ii) styrene derivatives such as ethylstyrene, α-methylstyrene, p-methylstyrene, and halogenated styrene (e.g., monobromostyrene, dibromostyrene, tribromostyrene, and chlorostyrene). For the aromatic vinyl monomer, one type may be used alone, or two or more types may be used in combination.

Examples of the unsaturated nitrile monomer from which the unsaturated nitrile units are derived are the same as those described in the section of (Copolymer (B)); therefore, the description is employed, and the description thereof is omitted here. For the unsaturated nitrile monomer, one type may be used alone, or two or more types may be used in combination.

The copolymer (C) may have structural units other than aromatic vinyl units and unsaturated nitrile units, for example, structural units derived from a monomer (hereinafter, also referred to as "another monomer (C)") other than the aromatic vinyl monomer and the unsaturated nitrile monomer, the monomer being copolymerizable with the aromatic vinyl monomer and/or the unsaturated nitrile monomer.

Examples of the other monomer (C) include a (meth)acrylic monomer and a conjugated diene monomer. The (meth)acrylic monomer and the conjugated diene monomer are the same as those described in the section of (Copolymer (B)); therefore, the descriptions are employed, and the descriptions thereof are omitted here. For the other monomer (C), one type may be used alone, or two or more types may be used in combination.

The content of aromatic vinyl units in the copolymer (C) is not particularly limited, but is preferably 55% by weight to 95% by weight, more preferably 60% by weight to 90% by weight, still more preferably 65% by weight to 85% by weight, and particularly preferably 70% by weight to 80% by weight, with respect to 100% by weight of the copolymer. When the content of aromatic vinyl units in the copolymer (C) is within the above range, the present composition has an advantage in that an extrusion-foamed molded product having a high expansion ratio and a high closed-cell ratio is likely to be obtained.

The content of unsaturated nitrile units in the copolymer (C) is not particularly limited, but is preferably 5% by weight to 45% by weight, more preferably 10% by weight to 40% by weight, still more preferably 15% by weight to 35% by weight, and particularly preferably 20% by weight to 30% by weight, with respect to 100% by weight of the copolymer. When the content of unsaturated nitrile units in the copolymer (C) is within the above range, the present composition has an advantage in that an extrusion-foamed molded product having a high expansion ratio and a high closed-cell ratio is likely to be obtained.

The total content of aromatic vinyl units and unsaturated nitrile units in the copolymer (C) is not particularly limited, but is preferably not less than 60% by weight, preferably not less than 70% by weight, preferably not less than 80% by weight, still more preferably not less than 90% by weight, and particularly preferably not less than 95% by weight, with respect to 100% by weight of the copolymer. The total content of aromatic vinyl units and unsaturated nitrile units in the copolymer (C) may be 100% by weight. In other words, the copolymer (C) may be composed only of aromatic vinyl units and unsaturated nitrile units.

Suitable examples of the copolymer (C) include a styrene/acrylonitrile copolymer containing styrene units and acrylonitrile units. For the copolymer (C), one type may be used alone, or two or more types may be used in combination. The copolymer (C) preferably contains at least the styrene/acrylonitrile copolymer. When the copolymer (C) contains at least the styrene/acrylonitrile copolymer, the present composition has an advantage in that the resulting extrusion-foamed molded product has an increased expansion ratio and an increased closed-cell ratio.

From the viewpoint of improving the dispersibility of the processing aid (C) into the vinyl chloride-based resin (A) and the polymer (B) in the present composition, the content of α-methylstyrene units in the (meth)acrylic polymer contained in the processing aid (C) is preferably less than 20% by weight, and more preferably 0% by weight (i.e., no α-methylstyrene units are contained), with respect to 100% by weight of the (meth)acrylic polymer. From the same viewpoint, the content of α-methylstyrene units in the copolymer (C) contained in the processing aid (C) is preferably less than 20% by weight, and more preferably 0% by weight (i.e., no α-methylstyrene units are contained), with respect to 100% by weight of the copolymer (C).

As the copolymer (C), a commercially available product (e.g., Blendex 869 manufactured by Galata) can also be used.

The weight average molecular weight of the processing aid (C) is 1,500,000 to 8,000,000. When the weight average molecular weight of the processing aid (C) is (a) not less than 1,500,000, the present composition has an advantage in that cell retainability during extrusion foaming molding is excellent, and also has an advantage in that the composition can obtain a suitable melt viscosity during extrusion foaming molding. When the weight average molecular weight of the processing aid (C) is not more than 8,000,000, the present composition has an advantage in that the dispersibility of the processing aid (C) into the vinyl chloride-based resin (A) and the polymer (B) in the present composition is favorable. The weight average molecular weight of the processing aid (C) is preferably 2,000,000 to 7,500,000, more preferably 2,500,000 to 6,500,000, still more preferably 3,000,000 to 6,000,000, and particularly preferably 3,500,000 to 5,000,000.

The weight average molecular weight of the processing aid (C) can be adjusted by means of, for example, the type and amount of a radical polymerization initiator used during production of the processing aid (C), the type and amount of a chain transfer agent used, the internal temperature of a polymerization machine, the amount of dissolved oxygen in the reaction system, and the monomer concentration in the polymerization machine.

The content of the processing aid (C) in the present composition is 5.0 parts by weight to 30.0 parts by weight with respect to a total of 100 parts by weight of the vinyl chloride-based resin (A) and the copolymer (B). When the content of the processing aid (C) is not less than 5.0 parts by weight with respect to a total of 100 parts by weight of the vinyl chloride-based resin (A) and the copolymer (B), the present composition has an advantage in that cell retainability during extrusion foaming molding is excellent. When the content of the processing aid (C) is not more than 30.0 parts by weight with respect to a total of 100 parts by weight of the vinyl chloride-based resin (A) and the copolymer (B), the present composition has an advantage in that the composition can obtain a suitable melt viscosity during extrusion foaming molding. The content of the processing aid (C) in the present composition is more preferably 6.0 parts by weight to 28.0 parts by weight, more preferably 7.0 parts by weight to 26.0 parts by weight, still more preferably 8.0 parts by weight to 24.0 parts by weight, and particularly preferably 9.0 parts by weight to 22.0 parts by weight, with respect to a total of 100 parts by weight of the vinyl chloride-based resin (A) and the copolymer (B).

The content of the processing aid (C) in the present composition is preferably 3.0 parts by weight to 25.0 parts by weight, more preferably 4.0 parts by weight to 22.0 parts by weight, more preferably 5.0 parts by weight to 20.0 parts by weight, still more preferably 6.0 parts by weight to 18.0 parts by weight, and particularly preferably 7.0 parts by weight to 16.0 parts by weight, with respect to 100 parts by weight of the present composition. When the content of the processing aid (C) with respect to 100 parts by weight of the present composition is not less than 3.0 parts by weight, the present composition has an advantage in that cell retainability during extrusion foaming molding is excellent. When the content of the processing aid (C) with respect to 100 parts by weight of the present composition is not more than 25.0 parts by weight, the present composition has the advantage of making it possible to provide a suitable melt viscosity during extrusion foaming molding.

In the present composition, the ratio (copolymer (B) content/processing aid (C) content) of the content of the copolymer (B) to the content of the processing aid (C) is not particularly limited. From the viewpoint of foaming characteristics, in the present composition, the ratio (copolymer (B) content/processing aid (C) content) of the content of the copolymer (B) to the content of the processing aid (C) is preferably more than 0.5. In other words, in the present composition, the content of the processing aid (C) is preferably smaller than the content of the copolymer (B). In the present composition, the ratio (copolymer (B) content/processing aid (C) content) of the content of the copolymer (B) to the content of the processing aid (C) is preferably more than 0.5 but not more than 10.0, more preferably more than 0.7 but not more than 10.0, more preferably more than 1.0 but not more than 10.0, more preferably more than 1.0 but not more than 8.0, more preferably more than 1.0 but not more than 7.0, still more preferably 1.1 to 6.0, and particularly preferably 1.2 to 5.5. When the ratio of the content (copolymer (B) content/processing aid (C) content) of the copolymer (B) to the content of the processing aid (C) is more than 0.5 in the present composition, the present composition has an advantage in that extrusion foaming molding can be performed at a low temperature. When the copolymer (B) content/the processing aid (C) content is not more than 10.0, the present composition has an advantage in that an extrusion-foamed molded product having a high expansion ratio can be obtained.

A method for producing the processing aid (C), in other words, a polymerization method for obtaining the processing aid (C), is not particularly limited, and a known method can be used. For example, as the polymerization method for obtaining the processing aid (C), bulk polymerization, solution polymerization, suspension polymerization, and emulsion polymerization can be employed. It is preferable to employ emulsion polymerization. For a method for producing the processing aid (C) (e.g., a method for emulsion polymerization to obtain the processing aid (C)), the description in the section of (Method for producing copolymer (B)) can be employed as appropriate except for the difference in the makeup of the monomer used.

When the processing aid (C) containing a (meth)acrylic polymer is produced, the (meth)acrylic polymer may be produced together with a polymer other than the (meth)acrylic polymer in order to improve granulability during the production. When the processing aid (C) containing the copolymer (C) is produced, the copolymer (C) may be produced together with a polymer other than the copolymer (C) in order to improve granulability during the production. When the processing aid (C) containing the (meth)acrylic polymer and the copolymer (C) is produced, the (meth)acrylic polymer and the copolymer (C) may be produced together with a polymer other than the (meth)acrylic polymer and the copolymer (C) in order to improve granulability during the production. In the present specification, the "polymer other than the (meth)acrylic polymer, the polymer being produced together with the (meth)acrylic polymer in the processing aid (C) containing the (meth)acrylic polymer in order to improve the granulability of the (meth)acrylic polymer", the "polymer other than the (meth)acrylic polymer, the polymer being produced together with the copolymer (C) in the processing aid (C) containing the copolymer (C) in order to improve the granulability of the copolymer (C)", and the "polymer other than the (meth)acrylic polymer and the copolymer (C), the polymer being produced together with the (meth)acrylic polymer and the copolymer (C) in the processing aid (C) containing the (meth)acrylic polymer and the copolymer (C) in order to improve the granulability of the (meth)acrylic polymer and the copolymer (C)" may be collectively referred to as a "carrier (C)".

The carrier (C) is not particularly limited, but a (meth)acrylic polymer obtained by polymerizing a (meth)acrylic monomer is suitably used.

A case (hereinafter, also referred to as "Case C1") in which the (meth)acrylic polymer is produced together with the carrier (C) is described here. In Case C1, after polymerization to obtain the (meth)acrylic polymer, the carrier (C) is preferably obtained by polymerization in the presence of the (meth)acrylic polymer. In Case C1, when the (meth)acrylic polymer is obtained by, for example, emulsion polymerization, production (polymerization) of the carrier (C) is particularly preferably carried out in a latex containing the (meth)acrylic polymer after the production (polymerization) of the (meth)acrylic polymer. When the production (polymerization) of the carrier (C) is carried out in a latex containing the (meth)acrylic polymer, a composite containing the (meth)acrylic polymer and the carrier (C) (or composed of the (meth)acrylic polymer and the carrier (C)) can be obtained. In the composite, the carrier (C) preferably exists outside the (meth)acrylic polymer and exists so as to cover at least a part of the (meth)acrylic polymer. In the composite, the carrier (C) may cover the whole of the (meth)acrylic polymer, or the (meth)acrylic polymer in the form of particles may be impregnated with the carrier (C). In the composite, the (meth)acrylic polymer and the carrier (C) are preferably not chemically bonded to each other. In Case C1, the composite containing the (meth)acrylic polymer and the carrier (C) (or composed of the (meth)acrylic polymer and the carrier (C)) is regarded as the processing aid (C). That is, in Case C1, the weight average molecular weight of the processing aid (C) can be said to be the weight average molecular weight of the composite containing the (meth)acrylic polymer and the carrier (C) (or composed of the (meth)acrylic polymer and the carrier (C)). Further, in Case C1, the content of the processing aid (C) can be said to be the content of the composite containing the (meth)acrylic polymer and the carrier (C) (or composed of the (meth)acrylic polymer and the carrier (C)).

A case (hereinafter, also referred to as "Case C2") in which the copolymer (C) is produced together with the carrier (C) is described here. In Case C2, after polymerization to obtain the copolymer (C), the carrier (C) is preferably obtained by polymerization in the presence of the copolymer (C). In Case C2, when the copolymer (C) is obtained by, for example, emulsion polymerization, production (polymerization) of the carrier (C) is particularly preferably carried out in a latex containing the copolymer (C) after the production (polymerization) of the copolymer (C). When the production (polymerization) of the carrier (C) is carried out in a latex containing the copolymer (C), a composite containing the copolymer (C) and the carrier (C) (or composed of the copolymer (C) and the carrier (C)) can be obtained. In the composite, the carrier (C) preferably exists outside the copolymer (C) and exists so as to cover at least a part of the copolymer (C). In the composite, the carrier (C) may cover the whole of the copolymer (C), or the copolymer (C) in the form of particles may be impregnated with the carrier (C). In the composite, the copolymer (C) and the carrier (C) are preferably not chemically bonded to each other. In Case C2, the composite containing the copolymer (C) and the carrier (C) (or composed of the copolymer (C) and the carrier (C)) is regarded as the processing aid (C). That is, in Case C2, the weight average molecular weight of the processing aid (C) can be said to be the weight average molecular weight of the composite containing the copolymer (C) and the carrier (C) (or composed of the copolymer (C) and the carrier (C)). Further, in Case C2, the content of the processing aid (C) can be said to be the content of the composite containing the copolymer (C) and the carrier (C) (or composed of the copolymer (C) and the carrier (C)).

A case (hereinafter, also referred to as "Case C3") in which the (meth)acrylic polymer and the copolymer (C) are produced together with the carrier (C) is described here. In Case C3, after polymerization to obtain the (meth)acrylic polymer and the copolymer (C), the carrier (C) is preferably obtained by polymerization in the presence of the (meth)acrylic polymer and the copolymer (C). In Case C3, when the (meth)acrylic polymer and the copolymer (C) are obtained by, for example, emulsion polymerization, the production (polymerization) of the carrier (C) is particularly preferably carried out in a latex containing the (meth)acrylic polymer and the copolymer (C) after the production (polymerization) of the (meth)acrylic polymer and the copolymer (C). When the production (polymerization) of the carrier (C) is carried out in a latex containing the (meth)acrylic polymer and the copolymer (C), a composite containing the (meth)acrylic polymer, the copolymer (C), and the carrier (C) (or composed of the (meth)acrylic polymer, the copolymer (C), and the carrier (C)) can be obtained. In the composite, the carrier (C) preferably exists outside the (meth)acrylic polymer and the copolymer (C) and exists so as to cover at least a part of the (meth)acrylic polymer and the copolymer (C). In the composite, the carrier (C) may cover the whole of the (meth)acrylic polymer and the copolymer (C), or the (meth)acrylic polymer and the copolymer (C) in the form of particles may be impregnated with the carrier (C). In the composite, the (meth)acrylic polymer and the copolymer (C), and the carrier (C), are preferably not chemically bonded to each other. In Case C3, the composite containing the (meth)acrylic polymer, the copolymer (C), and the carrier (C) (or composed of the (meth)acrylic polymer, the copolymer (C), and the carrier (C)) is regarded as the processing aid (C). That is, in Case C3, the weight average molecular weight of the processing aid (C) can be said to be the weight average molecular weight of the composite containing the (meth)acrylic polymer, the copolymer (C), and the carrier (C) (or composed of the (meth)acrylic polymer, the copolymer (C), and the carrier (C)). Further, in Case C3, the content of the processing aid (C) can be said to be the content of the composite containing the (meth)acrylic polymer, the copolymer (C), and the carrier (C) (or composed of the (meth)acrylic polymer, the copolymer (C), and the carrier (C)).

In Cases C1 to C3, the present composition can contain the carrier (C). Therefore, Cases C1 to C3 can also be said to be cases in which the processing aid (C) contains the carrier (C).

### (Blowing agent (D))

The blowing agent (D) is not particularly limited. Examples of the blowing agent (D) include a physical blowing agent and a chemical blowing agent. Examples of the physical blowing agent include: (a) aliphatic hydrocarbons such as propane, normal butane, isobutane, normal pentane, isopentane, and hexane; (b) alicyclic hydrocarbons such as cyclopentane and cyclobutane; (c) ethers such as dimethyl ether, diethyl ether, and methyl ethyl ether; (d) alcohols such as methanol and ethanol; (e) inorganic gases such as air, nitrogen, and carbon dioxide; and (f) water. Examples of the chemical blowing agent include a thermally decomposable blowing agent. Examples of the thermally decomposable blowing agent include an inorganic thermally decomposable blowing agent and an organic thermally decomposable blowing agent. Examples of the inorganic thermally decomposable blowing agent include sodium bicarbonate (also known as baking soda), bicarbonates, and carbonates. Examples of the organic thermally decomposable blowing agent include azodicarbonamide (ADCA), dinitrosopentamethylenetetramine (e.g., DPT (N,N'-dinitrosopentamethylenetetramine)), and oxybisbenzenesulfonyl hydrazide (e.g., OBSH (4,4'-oxybisbenzenesulfonyl hydrazide)).

For the blowing agent (D), one of the various substances described above may be used alone, or two or more of the various substances described above may be used in combination.

When a physical blowing agent is used, various kinds of equipment may be required such as equipment for impregnating the resin composition with the physical blowing agent and equipment for explosion protection. Therefore, the blowing agent (D) preferably contains a chemical blowing agent, and more preferably is a chemical blowing agent (is composed only of a chemical blowing agent). The blowing agent (D) (i) more preferably contains a thermally decomposable blowing agent, more preferably is composed only of a thermally decomposable blowing agent, and (ii) still more preferably is composed only of one or more selected from the group consisting of sodium bicarbonate, bicarbonates, carbonates, ADCA, DPT, and OBSH. When the blowing agent (D) has the configuration described above, the present composition has the advantage of eliminating impregnation equipment and explosion-proof equipment, thereby reducing the costs for producing an extrusion-foamed molded product. Further, the blowing agent (D) can also be used in combination with a foaming auxiliary (e.g., a urea compound and a zinc compound) for adjusting the decomposition temperature of the blowing agent.

The content of the blowing agent (D) in the present composition is not particularly limited. The content of the blowing agent (D) in the present composition is preferably 1.0 part by weight to 20.0 parts by weight, more preferably 1.5 parts by weight to 18.0 parts by weight, more preferably 2.0 parts by weight to 16.0 parts by weight, still more preferably 2.5 parts by weight to 14.0 parts by weight, and particularly preferably 3.0 parts by weight to 12.0 parts by weight, with respect to a total of 100 parts by weight of the vinyl chloride-based resin (A) and the copolymer (B). When the content of the blowing agent (D) is not less than 3.0 parts by weight with respect to a total of 100 parts by weight of the vinyl chloride-based resin (A) and the copolymer (B), the present composition has the advantage of making it possible to provide an extrusion-foamed molded product having a high expansion ratio. When the content of the blowing agent (D) is not more than 20.0 parts by weight with respect to a total of 100 parts by weight of the vinyl chloride-based resin (A) and the copolymer (B), the present composition has the advantage of making it possible to provide an extruded foam having a high expansion ratio through low-temperature molding.

The content of the blowing agent (D) in the present composition is preferably 0.8 part by weight to 15.0 parts by weight, more preferably 1.2 parts by weight to 12.0 parts by weight, more preferably 1.5 parts by weight to 10.0 parts by weight, still more preferably 2.0 parts by weight to 9.0 parts by weight, and particularly preferably 2.5 parts by weight to 8.0 parts by weight, with respect to 100 parts by weight of the composition. When the content of the blowing agent (D) with respect to 100 parts by weight of the present composition is not less than 1.0 part by weight, the present composition has the advantage of making it possible to provide an extrusion-foamed molded product having a high expansion ratio. When the content of the blowing agent (D) with respect to 100 parts by weight of the present composition is not more than 15.0 parts by weight, the present composition has the advantage of making it possible to provide an extruded foam having a high expansion ratio through low-temperature molding.

From the viewpoint of eliminating impregnation equipment and explosion-proof equipment to further reduce the costs for producing an extrusion-foamed molded product, a lower content of the physical blowing agent in the blowing agent (D) is preferable. The content of the physical blowing agent in the blowing agent (D) is preferably less than 5 parts by weight, more preferably less than 3 parts by weight, still more preferably less than 1 part by weight, and particularly preferably 0 parts by weight, with respect to 100 parts by weight of the blowing agent (D). In other words, the blowing agent (D) particularly preferably does not contain a physical blowing agent.

### (Fluidity improver (E))

The present composition may further contain a fluidity improver (E) in addition to the vinyl chloride-based resin (A), the copolymer (B), the processing aid (C), and the blowing agent (D).

The fluidity improver (E) is not particularly limited provided that the fluidity improver (E) is a substance other than the vinyl chloride-based resin (A), the copolymer (B), and the processing aid (C). The fluidity improver (E) can have the function of improving fluidity of the composition, particularly the fluidity during melt kneading, in the composition. The fluidity improver (E) preferably contains at least a first polymer (e1). In order to improve granulability during the production, the fluidity improver (E) preferably further contains a second polymer (e2) in addition to the first polymer (e1). For the fluidity improver (E), one type may be used, or two or more types may be used in combination.

### (First polymer (e1))

The first polymer (e1) preferably contains, with respect to 100% by weight of the whole first polymer (e1), (i) 50% by weight to 70% by weight of aromatic vinyl-based units derived from an aromatic vinyl monomer, (ii) 5% by weight to 20% by weight of vinyl cyanide-based units derived from a vinyl cyanide-based monomer, and (iii) 10% by weight to 45% by weight of structural units derived from a vinyl monomer other than the aromatic vinyl monomer and the vinyl cyanide-based monomer, the vinyl monomer being copolymerizable with the aromatic vinyl monomer and/or the vinyl cyanide-based monomer. In the present specification, the "vinyl monomer other than the aromatic vinyl monomer and the vinyl cyanide-based monomer, the vinyl monomer being copolymerizable with the aromatic vinyl monomer and/or the vinyl cyanide-based monomer" may also be referred to as "another monomer (E1)".

Examples of the aromatic vinyl monomer are the same as those described in the section of (Processing aid (C)); therefore, the description is employed, and the description thereof is omitted here. The aromatic vinyl monomer in the first polymer (e1) is preferably styrene. For the aromatic vinyl monomer in the first polymer (e1), one type may be used, or two or more types may be used in combination.

Examples of the vinyl cyanide-based compound include acrylonitrile and methacrylonitrile, and acrylonitrile is preferable. One of these may be used alone, or two or more of these may be used in combination.

Examples of the other monomer (E1) include linear alkyl (meth)acrylates having 1 to 20 carbon atoms, such as methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, and hexadecyl (meth)acrylate; branched-chain alkyl (meth)acrylates having 3 to 20 carbon atoms, such as isopropyl (meth)acrylate, isobutyl (meth)acrylate, s-butyl (meth)acrylate, t-butyl (meth)acrylate, isopentyl (meth)acrylate, 2-ethylhexyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isohexadecyl (meth)acrylate, isoheptadecyl (meth)acrylate, and isooctadecyl (meth)acrylate; cyclic alkyl (meth)acrylates having 3 to 20 carbon atoms, such as cyclopropyl (meth)acrylate, cyclobutyl (meth)acrylate, cyclopentyl (meth)acrylate, cyclohexyl (meth)acrylate, cyclooctyl (meth)acrylate, and cyclodecyl (meth)acrylate; aryl (meth)acrylates such as phenyl (meth)acrylate and methylphenyl (meth)acrylate; aralkyl (meth)acrylates such as benzyl (meth)acrylate; unsaturated acid anhydrides such as maleic anhydride, itaconic anhydride, and citraconic anhydride; unsaturated acids such as acrylic acid and methacrylic acid; imide compounds of α,β-unsaturated dicarboxylic acids such as maleimide, N-methylmaleimide, N-butylmaleimide, N-(p-methylphenyl)maleimide, N-phenylmaleimide, and N-cyclohexylmaleimide; epoxy group-containing unsaturated compounds such as glycidyl (meth)acrylate and allyl glycidyl ether; unsaturated carboxylic acid amides such as acrylamide and methacrylamide; amino group-containing unsaturated compounds such as acrylic amine, aminomethyl (meth)acrylate, aminoethyl (meth)acrylate, aminopropyl (meth)acrylate, and aminostyrene; hydroxyl group-containing unsaturated compounds such as 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl acrylate, 2-hydroxyethyl methacrylate, and hydroxystyrene; and oxazoline group-containing unsaturated compounds such as vinyl oxazoline. One of these may be used alone, or two or more of these may be used in combination.

With respect to 100% by weight of the first polymer (e1) contained in the fluidity improver (E), the content of α-methylstyrene units in said first polymer (e1) may be less than 60% by weight, may be less than 55% by weight, may be less than 50% by weight, may be less than 45% by weight, may be less than 40% by weight, may be less than 35% by weight, may be less than 30% by weight, may be less than 25% by weight, or may be less than 20% by weight.

The weight average molecular weight of the first polymer (e1) is not particularly limited, but is preferably 15,000 to 120,000. When the weight average molecular weight of the first polymer (e1) is not more than 120,000, a composition can be provided that has a favorable balance among three properties, namely, fluidity during melting of the composition, kneadability during the melting, and foamability of the extrusion-foamed molded product. When the weight average molecular weight of the first polymer (e1) is not less than 15,000, there is no risk that the melt-start temperature of the composition becomes excessively low, and as a result, the advantage of excellent handleability is achieved.

### (Second polymer (e2))

In the fluidity improver (E), the second polymer (e2) is an optional component and need not be contained. When the fluidity improver (E) contains the second polymer (e2), the second polymer (e2) is preferably produced together with the first polymer (e1). A case (hereinafter, also referred to as "Case B") in which the first polymer (e1) is produced together with the second polymer (e2) is described here. In Case B, after polymerization to obtain the first polymer (e1), the second polymer (e2) is preferably obtained by polymerization in the presence of the first polymer (e1). In Case B, when the first polymer (e1) is obtained by, for example, emulsion polymerization, the production (polymerization) of the second polymer (e2) is particularly preferably carried out in a latex containing the first polymer (e1) after the production (polymerization) of the first polymer (e1). When production (polymerization) of the second polymer (e2) is carried out in a latex containing the first polymer (e1), a composite containing the first polymer (e1) and the second polymer (e2) (or composed of the first polymer (e1) and the second polymer (e2)) can be obtained. In the composite, the second polymer (e2) preferably exists outside the first polymer (e1) and exists so as to cover at least a part of the first polymer (e1). In the composite, the second polymer (e2) may cover the whole of the first polymer (e1), or the first polymer (e1) in the form of particles may be impregnated with the second polymer (e2). In the composite, the first polymer (e1) and the second polymer (e2) are preferably not chemically bonded to each other. In Case B, the composite containing the first polymer (e1) and the second polymer (e2) (or composed of the first polymer (e1) and the second polymer (e2)) is regarded as the fluidity improver (E). That is, in Case B, the content of the fluidity improver (E) can be said to be the content of the composite containing the first polymer (e1) and the second polymer (e2) (or composed of the first polymer (e1) and the second polymer (e2)).

When the fluidity improver (E) contains the second polymer (e2), the second polymer (e2) preferably contains, with respect to 100% by weight of the whole second polymer (e2), (i) 10% by weight to 90% by weight of alkyl methacrylate units derived from alkyl methacrylate, and (ii) 10% by weight to 90% by weight of structural units derived from a vinyl monomer other than alkyl methacrylate, the vinyl monomer being copolymerizable with alkyl methacrylate, as constituent monomers. In the present specification, the "vinyl monomer other than alkyl methacrylate, the vinyl monomer being copolymerizable with alkyl methacrylate" may also be referred to as "another monomer (E2)".

When the content ratio of alkyl methacrylate units in the second polymer (e2) is relatively high, it is possible to increase the Tg (glass transition temperature) of the second polymer (e2), and as a result, it is possible to improve the granulability of the fluidity improver (E).

Examples of the alkyl methacrylate are the same as the alkyl (meth)acrylates described in the section of (Copolymer (B)); therefore, the description is employed, and the description thereof is omitted here.

In the second polymer (e2), the number of carbon atoms of the alkyl group of the alkyl methacrylate is preferably 1 to 14, more preferably 1 to 12, still more preferably 1 to 10, even more preferably 1 to 8, and particularly preferably 1 to 6. The alkyl methacrylate in the second polymer (e2) is more preferably a linear alkyl methacrylate, and even more preferably methyl methacrylate or ethyl methacrylate.

Examples of the other monomer (E2) in the second polymer (e2) include the various monomers described in the section of (First polymer (e1)); therefore, the description is employed, and the description thereof is omitted here.

With respect to 100% by weight of the second polymer (e2), which may be contained in the fluidity improver (E), the content of α-methylstyrene units in the second polymer (e2) may be less than 60% by weight, may be less than 55% by weight, may be less than 50% by weight, may be less than 45% by weight, may be less than 40% by weight, may be less than 35% by weight, may be less than 30% by weight, may be less than 25% by weight, or may be less than 20% by weight.

It is preferable that the second polymer (e2) exist outside the first polymer (e1), and that the Tg of the second polymer (e2) be 30°C to 110°C. Such a configuration makes it possible to improve the granulability of the fluidity improver (E).

The weight average molecular weight of the second polymer (e2) is not particularly limited, but is preferably 20,000 to 300,000, and more preferably 20,000 to 150,000.

When the fluidity improver (E) contains the second polymer (e2), the fluidity improver (E) preferably contains 60% by weight to 90% by weight of the first polymer (e1) and 10% by weight to 40% by weight of the second polymer (e2), with respect to a total of 100% by weight of the first polymer (e1) and the second polymer (e2), from the viewpoint of a balance among three properties, namely, fluidity during melting of the composition, the impact resistance of the extrusion-foamed molded product, and the heat resistance of the extrusion-foamed molded product.

The content of the fluidity improver (E) in the present composition is not particularly limited. The content of the fluidity improver (E) in the present composition is preferably 0.1 part by weight to 12.0 parts by weight, more preferably 0.3 parts by weight to 10.0 parts by weight, more preferably 0.5 parts by weight to 8.0 parts by weight, more preferably 0.7 parts by weight to 6.0 parts by weight, still more preferably 0.8 parts by weight to 5.0 parts by weight, and particularly preferably 1.0 part by weight to 4.0 parts by weight, with respect to a total of 100 parts by weight of the vinyl chloride-based resin (A) and the copolymer (B). When the content of the fluidity improver (E) is not less than 0.1 part by weight with respect to a total of 100 parts by weight of the vinyl chloride-based resin (A) and the copolymer (B), the present composition has an advantage in that the gelation point during melting becomes earlier and kneadability is improved. When the content of the fluidity improver (E) is not more than 12.0 parts by weight with respect to a total of 100 parts by weight of the vinyl chloride-based resin (A) and the copolymer (B), the present composition has an advantage in that fluidity during melting is improved.

The content of the fluidity improver (E) in the present composition is preferably 0.1 part by weight to 10.0 parts by weight, more preferably 0.3 parts by weight to 8.0 parts by weight, more preferably 0.4 parts by weight to 7.0 parts by weight, more preferably 0.6 parts by weight to 5.0 parts by weight, still more preferably 0.7 parts by weight to 4.0 parts by weight, and particularly preferably 0.8 parts by weight to 3.0 parts by weight, with respect to 100 parts by weight of the present composition. When the content of the processing aid (C) with respect to 100 parts by weight of the present composition is not less than 0.1 part by weight, the present composition has an advantage in that the gelation point during melting becomes earlier and kneadability is improved. When the content of the fluidity improver (E) with respect to 100 parts by weight of the present composition is not more than 10.0 parts by weight, the present composition has an advantage in that fluidity during melting is improved.

A method for producing the fluidity improver (E), in other words, a polymerization method for obtaining the fluidity improver (E), is not particularly limited, and a known method can be used. Examples of a polymerization method that can be employed for obtaining the fluidity improver (E) include bulk polymerization, solution polymerization, suspension polymerization, and emulsion polymerization. It is preferable to employ emulsion polymerization. For a method for producing the fluidity improver (E) (e.g., a method for emulsion polymerization for obtaining the fluidity improver (E)), the description in the section of (Method for producing copolymer (B)) can be employed as appropriate except for the difference in the makeup of the monomer used.

### (Another additive)

The present composition may further contain, as necessary, another additive in addition to the vinyl chloride-based resin (A), the copolymer (B), the processing aid (C), the blowing agent (D), and the optionally contained fluidity improver (E). Examples of the other additive include, but are not particularly limited to, a resin other than the vinyl chloride-based resin (A), a flame retardant, a stabilizer, a processing aid other than the processing aid (C) (another processing aid), a lubricant, a fluidity improver other than the fluidity improver (E), an impact modifier, a nucleating agent, a foaming auxiliary, an antistatic agent, a radiant heat transfer suppressor, a plasticizer, a solvent, a colorant, and a filler. One of these other additives may be used alone, or two or more of these other additives may be used in combination.

Examples of the processing aid other than the processing aid (C) include (a) a (meth)acrylic polymer having a weight average molecular weight of less than 1,500,000 or more than 8,000,000, and (b) a copolymer having aromatic vinyl units and unsaturated nitrile units as structural units, the copolymer having a weight average molecular weight of less than 1,500,000 or more than 8,000,000.

As the stabilizer, a stabilizer conventionally used for a vinyl chloride-based resin and a chlorinated vinyl chloride-based resin can be used. Examples of the stabilizer include (a) a tin-based stabilizer, (b) a lead-based stabilizer, (c) a calcium-zinc stabilizer, (d) a barium-zinc stabilizer, (e) an antioxidant such as a phenolic compound, a phosphorus compound, or an amine compound, (f) an epoxy stabilizer, and (g) zeolite. As the stabilizer, octyl tin mercaptide, which is a tin-based stabilizer, is suitably used. As the octyl tin mercaptide, a commercially available product (e.g., TVS #8831 manufactured by Nitto Chemical Industry Co., Ltd.) may be used.

Examples of the lubricant include (a) waxes such as ester wax and polyethylene wax, (b) low-density polyethylene, (c) fatty acid esters, and (d) fatty acid metal salts such as calcium stearate and zinc stearate. As the lubricant, low-density polyethylene and a fatty acid ester are suitably used. As the low-density polyethylene, a commercially available product (e.g., AC-629A manufactured by Honewell) may be used. As the lubricant, commercially available products (e.g., SL-02 manufactured by Riken Vitamin Co., Ltd., and Loxiol G32 manufactured by EMERY OLEOCHEMICALS) may be used.

### (Method for producing vinyl chloride-based resin composition)

A method for producing the present composition is not particularly limited. For example, the present composition can be produced (obtained) by mixing raw materials ((a) the vinyl chloride-based resin (A), the copolymer (B), the processing aid (C), and the blowing agent (D), as well as the optionally used fluidity improver (E), another additive, etc.).

A device for mixing the raw materials is not particularly limited. For example, a mixer (e.g., a Henschel mixer, a tumbler mixer, a super mixer, and the like) can be used. A temperature (mixing temperature) for mixing the raw materials is not particularly limited, but examples thereof include 90°C to 120°C.

### [2. Extrusion-foamed molded product]

An extrusion-foamed molded product in accordance with an embodiment of the present invention is an extrusion-foamed molded product obtained by extrusion-foaming the vinyl chloride-based resin composition for an extrusion-foamed molded product in accordance with an embodiment of the present invention described in the section [1. Vinyl chloride-based resin composition]. An extrusion-foamed molded product in accordance with an embodiment of the present invention can also be said to contain the vinyl chloride-based resin composition for an extrusion-foamed molded product in accordance with an embodiment of the present invention described in the section [1. Vinyl chloride-based resin composition].

As a result of having the configuration described above, the present extrusion-foamed molded product has an advantage in that the expansion ratio is high. An extrusion-foamed molded product has an advantage in that, when having a higher expansion ratio, the extrusion-foamed molded product is lighter in weight than an extrusion-foamed molded product having the same volume.

### (Method for producing extrusion-foamed molded product)

A method for producing the present extrusion-foamed molded product, in other words, a method for extrusion foaming molding of the present composition, is not particularly limited, and a known extrusion foaming molding method can be employed. For example, the present extrusion-foamed molded product can be produced (obtained) by melt-kneading the present composition using an extruder equipped with a die, and extruding the present composition through the die. Alternatively, the present extrusion-foamed molded product can be produced (obtained) by feeding the raw materials ((a) the vinyl chloride-based resin (A), the copolymer (B), the processing aid (C), and the blowing agent (D), and the optionally used fluidity improver (E), another additive, etc.) of the present composition into an extruder equipped with a die, and melt-kneading the raw materials to produce the present composition within the extruder, and further extruding the melt-kneaded present composition through the die.

The extruder is not particularly limited, and a single-screw extruder, a twin-screw extruder, and the like can be used. A temperature (also referred to as a composition temperature, a mixing temperature, or a resin temperature) at which the present composition is melt-kneaded is not particularly limited, but examples thereof include 165°C to 200°C.

### [3. Uses]

The present composition and the present extrusion-foamed molded product obtained by extrusion foaming molding of the present composition can be suitably used, in particular, for building insulation materials, interior building materials, bathroom members, ceiling materials, rigid plastic extruded sandwich core materials, internal heat-insulating core materials for resin window sashes, core materials for metal sandwich panels, cushioning materials, heat-insulating materials for bathrooms, and heat-insulating materials for hot-water storage tanks.

An embodiment of the present invention encompasses inventions described in the following <1> to <6>.
<1> A vinyl chloride-based resin composition for an extrusion-foamed molded product, comprising: a vinyl chloride-based resin (A);
   a copolymer (B);
   a processing aid (C); and
   a blowing agent (D),
   the copolymer (B) containing 20% by weight to 85% by weight of α-methylstyrene units as a structural unit with respect to 100% by weight of the copolymer (B), and having a glass transition temperature of not less than 90°C,
   the copolymer (B) being contained in an amount of 5.0 parts by weight to 75.0 parts by weight with respect to a total of 100 parts by weight of the vinyl chloride-based resin (A) and the copolymer (B),
   the processing aid (C) containing (i) a (meth)acrylic polymer and/or (ii) a copolymer having aromatic vinyl units and unsaturated nitrile units as structural units,
   the processing aid (C) having a weight average molecular weight of 1,500,000 to 8,000,000,
   the processing aid (C) being contained in an amount of 5.0 parts by weight to 30.0 parts by weight with respect to a total of 100 parts by weight of the vinyl chloride-based resin (A) and the copolymer (B).
<2> The vinyl chloride-based resin composition for an extrusion-foamed molded product described in <1>, wherein an average degree of polymerization of the vinyl chloride-based resin (A) is 400 to 1,300.
<3> The vinyl chloride-based resin composition for an extrusion-foamed molded product described in <1> or <2>, wherein when the vinyl chloride-based resin composition further comprises a carrier (B), a composite (B) which contains the copolymer (B) and the carrier (B) has a weight average molecular weight of 20,000 to 800,000, and
   when the vinyl chloride-based resin composition does not comprise the carrier (B),
   the copolymer (B) has a weight average molecular weight of 20,000 to 800,000.
<4> The vinyl chloride-based resin composition for an extrusion-foamed molded product described in any one of <1> to <3>, wherein the blowing agent (D) is a chemical blowing agent.
<5> The vinyl chloride-based resin composition for an extrusion-foamed molded product described in any one of <1> to <4>, wherein the vinyl chloride-based resin (A) contains a chlorinated vinyl chloride-based resin.
<6> An extrusion-foamed molded product obtained by extrusion-foaming the vinyl chloride-based resin composition for an extrusion-foamed molded product described in any one of <1> to <5>.

### Examples

The following description will discuss an embodiment of the present invention in detail with reference to Examples and Comparative Examples. Note that the present invention is not limited to these examples. An embodiment of the present invention can be achieved by altering the following Examples as appropriate within the scope of the gist disclosed in the above and following descriptions. Any embodiment achieved by altering the following Examples as appropriate is also within the technical scope of the present invention. Note that in the following Examples, Comparative Examples, and Table, "part(s)" means "part(s) by weight", and "%" means "% by weight".

### [Measurement methods]

Methods for measurement and evaluation of physical properties measured in Examples are as follows.

### <Weight average molecular weight of polymer, copolymer, or composite>

A polymer, copolymer, or composite subjected to the measurement was dissolved in tetrahydrofuran (THF) to obtain a THF-soluble component. Using the THF-soluble component as a sample, the weight average molecular weight of the sample was determined by using gel permeation chromatography (HLC-8220GPC manufactured by Tosoh Corporation). The measurement conditions for that case were sample solution: sample 20 mg/THF 10 mL, measurement temperature: 25°C, detector: differential refractive index detector, and injection amount: 1 mL. Additionally, polystyrene having a known weight average molecular weight was subjected to gel permeation chromatography under the same conditions as the sample to prepare a calibration curve. Using the obtained calibration curve, the weight average molecular weight of the polymer, the copolymer, or the composite was calculated in terms of polystyrene.

### <Glass transition temperature (Tg) of (co)polymer>

The Tg of the polymer or copolymer was calculated by the FOX equation described above. The Tg values of homopolymers are as follows: α-methylstyrene (168°C), acrylonitrile (97°C), methyl methacrylate (110°C), and butyl acrylate (-54°C).

### <Extrusion molding evaluation>

Using Laboplast, which is a twin-screw conical extruder manufactured by Toyo Seiki Seisaku-sho, Ltd., and further using a breaker plate, two screen meshes #60, and a flat die having a thickness of 3 mm and a width of 11 mm, the compositions obtained in Examples were subjected to extrusion foaming molding to obtain respective extrusion-foamed molded products, and the compositions obtained in Comparative Examples were subjected to extrusion foaming molding to obtain respective extrusion-foamed molded products. Conditions for the extrusion foaming molding were as follows. Cylinder temperatures: C1/170°C; C2/180°C; C3/180°C; and D/160°C, screw rotation speed: 30 rpm, resin temperature: around 190°C.

For each of the resulting extrusion-foamed molded products, the expansion ratio was measured, and moldability and appearance were checked.

### (Expansion ratio)

The expansion ratio of each of the extrusion-foamed molded products was measured using a specific gravity measuring instrument.

### (Evaluation of moldability and appearance)

The presence or absence of rupture of foam cells on a surface of each extrusion-foamed molded product, and the presence or absence of surface irregularities caused by the rupture were visually inspected and evaluated on the basis of the following criteria.
2 (Very excellent): No rupture of foam cells is observed, the surface has no irregularities, and the surface is smooth.
1 (Good): Although no rupture of foam cells is observed, the surface has irregularities with a level difference within a range causing no problem in use.
0 (Poor): Many ruptured cells are observed, and due to the rupture, the surface has many irregularities with a level difference within a range causing a problem in use, and the surface is rough.

### [Materials]

Substances used in Examples and Comparative Examples are as follows.

### <Vinyl chloride-based resin (A)>

A1: Vinyl chloride resin (PVC) (S-1007, manufactured by Kaneka Corporation; the degree of polymerization of 700; a homopolymer of vinyl chloride)
A2: Chlorinated vinyl chloride resin (CPVC) (H716S, manufactured by Kaneka Corporation; the degree of polymerization of 600; the chlorine content of 67% by weight; a resin obtained by chlorinating a homopolymer of vinyl chloride)

### <Copolymer (B)>

B1: A composite containing the copolymer (B) obtained in Production Example 1 below was used. The proportion of the copolymer (B) with respect to 100% by weight of the composite was 90% by weight.

### <Processing aid (C)>

C1: Processing aid (C1) obtained in Production Example 2 below
C2: Processing aid (C2) obtained in Production Example 3 below
C3: Styrene/acrylonitrile copolymer (BLENDEX 869, manufactured by Galata Chemicals, SAN processing aid; the weight average molecular weight (Mw) of approximately 3,000,000)

### <Blowing agent (D)>

D1: Baking soda (SC-P, manufactured by Eiwa Chemical Ind. Co., Ltd.)
D2: Mixture of ADCA (azodicarbonamide) and baking soda (FE-512, manufactured by Eiwa Chemical Ind. Co., Ltd.)

### <Fluidity improver (E)>

E1: Fluidity improver (E1) obtained in Production Example 4 below

### <Other additives>

### (Another processing aid)

F1: Another processing aid (F) obtained in Production Example 5 below

### (Stabilizer)

F2: Octyl tin mercaptide (TVS #8831, manufactured by Nitto Chemical Industry Co., Ltd.)

### (Lubricant)

F3: Special fatty acid ester (SL-02, manufactured by Riken Vitamin Co., Ltd.)
F4: Fatty acid ester (Loxiol G32, manufactured by EMERY OLEOCHEMICALS)
F5: Low-density polyethylene (AC-629A, manufactured by Honewell; oxidized type)

### [Production Examples]

### <Production Example 1>

### (Production of composite containing copolymer (B))

An aqueous solution was prepared by dissolving 3.0 parts of sodium palmitate, 0.01 parts of disodium ethylenediaminetetraacetate, and 0.0025 parts of ferrous sulfate in water. The resulting aqueous solution was put in a reactor equipped with a stirrer, and water was further added to adjust the total amount of the aqueous solution to 250 parts.

Gas in the reactor was replaced with nitrogen to remove oxygen from the space portion and from the aqueous solution. Thereafter, while the contents (aqueous solution) were stirred, 0.4 parts of sodium formaldehyde sulfoxylate was put into the reactor equipped with the stirrer, and the contents were heated to 60°C. Thereafter, 63 parts of α-methylstyrene, 27 parts of acrylonitrile, 0.27 parts of tertiary dodecyl mercaptan, and 0.27 parts of cumene hydroperoxide were continuously added dropwise to the contents over 6 hours. After completion of the dropwise addition, stirring of the contents was continued for 1 hour while the contents were maintained at 60°C. The copolymer (B) was formed by the above operations.

After completion of polymerization to obtain the copolymer (B), while the contents were stirred, a mixture of 7.0 parts of methyl methacrylate, 3.0 parts of butyl acrylate, and 0.3 parts of t-butyl hydroperoxide was continuously added to the contents over 60 minutes to carry out polymerization. After completion of the addition of the mixture, stirring of the contents was continued for not less than 1 hour while the contents were maintained at 60°C. The polymerization was thus completed. A carrier (B) capable of covering at least a part of the copolymer (B) was formed by the above operations. Thereafter, the contents were cooled to obtain a latex of a composite containing the copolymer (B) and the carrier (B).

Next, under a temperature condition of 65°C, the resulting latex of the composite was added to 5 parts of an aqueous calcium chloride solution diluted to a concentration of 1% by weight to coagulate the composite. Next, heat treatment, dehydration, washing, and drying were carried out to obtain a powder of the composite. The glass transition temperature of the copolymer (B) was calculated by the method described above, and the Tg was found to be 130°C. The weight average molecular weight of the composite was measured by the method described above, and was found to be 100,000.

### <Production Example 2>

### (Production of processing aid (C1))

An aqueous solution was prepared by dissolving 0.5 parts of sodium dioctyl succinate in water. The resulting aqueous solution was put in a reactor equipped with a stirrer, and water was further added to adjust the total amount of the aqueous solution to 140 parts.

The contents were heated to 60°C, and gas in the reactor was replaced with nitrogen to remove oxygen from the space portion and from the aqueous solution. Thereafter, 0.0005 parts by weight of potassium persulfate was added to the contents. Next, while the contents (aqueous solution) were stirred, a mixture composed of 72 parts of methyl methacrylate and 8 parts of butyl acrylate was added to the contents over 30 minutes. After the addition of the mixture, the contents were stirred for 5 hours while being maintained at 60°C. The polymerization was thus terminated. A (meth)acrylic polymer was formed by the above operations.

After completion of the polymerization to obtain the (meth)acrylic polymer, 0.05 parts by weight of potassium persulfate was added to the contents. Thereafter, while the contents were stirred, a mixture of 8 parts of methyl methacrylate and 12 parts of butyl acrylate was continuously added to the contents over 50 minutes to carry out polymerization. After completion of the addition of the mixture, stirring of the contents was continued for not less than 1 hour while the contents were maintained at 60°C. The polymerization was thus completed. A carrier (C) capable of covering at least a part of the (meth)acrylic polymer was formed by the above operations. Thereafter, the contents were cooled to obtain a latex of a composite containing the (meth)acrylic polymer and the carrier (C), that is, the processing aid (C1).

Next, by the same method (operations) as in Production Example 1, a powder of the composite (i.e., the processing aid (C1)) was obtained from the latex of the composite (i.e., the processing aid (C1)). The weight average molecular weight of the composite (i.e., the processing aid (C1)) was measured by the method described above, and was found to be 4,500,000.

### <Production Example 3>

### (Production of processing aid (C2))

A (meth)acrylic polymer was formed by the same method (operations) as in Production Example 2, except that the amount of potassium persulfate used was changed from 0.0005 parts by weight to 0.0002 parts by weight.

Next, a carrier (C) capable of covering at least a part of the (meth)acrylic polymer was formed by the same method (operations) as in Production Example 2. Thereafter, the contents were cooled to obtain a latex of a composite containing the (meth)acrylic polymer and the carrier (C), that is, the processing aid (C2).

Next, by the same method (operations) as in Production Example 1, a powder of the composite (i.e., the processing aid (C2)) was obtained from the latex of the composite (i.e., the processing aid (C2)). The weight average molecular weight of the composite (i.e., the processing aid (C2)) was measured by the method described above, and was found to be 6,000,000.

### <Production Example 4>

### (Production of fluidity improver (E1))

An aqueous solution was prepared by dissolving 1.0 part of sodium dioctyl sulfosuccinate, 0.0050 parts of disodium ethylenediaminetetraacetate, and 0.0025 parts of ferrous sulfate in water. The resulting aqueous solution was put in a reactor equipped with a stirrer, and water was further added to adjust the total amount of the aqueous solution to 200 parts.

Gas in the reactor was replaced with nitrogen to remove oxygen from the space portion and from the aqueous solution. Thereafter, while the contents (aqueous solution) were stirred, 0.4 parts of sodium formaldehyde sulfoxylate was put into the reactor equipped with the stirrer, and the contents were heated to 75°C. Thereafter, while stirring of the contents was continued, a mixture of 12.6 parts of acrylonitrile, 43.4 parts of styrene, 6.0 parts of butyl acrylate, 18.0 parts of methyl methacrylate, 0.8 parts of t-dodecyl mercaptan, and 1 part of t-butyl hydroperoxide was continuously added to the contents over 200 minutes to carry out polymerization. During the polymerization, 0.3 parts of sodium dioctyl sulfosuccinate was added to the contents twice at predetermined timings. During the polymerization, 0.15 parts of sodium formaldehyde sulfoxylate was added to the contents once at a predetermined timing. A first polymer (e1-1) was formed by the above operations.

After completion of the polymerization to obtain the first polymer (e1-1), while the contents were stirred, a mixture of 4 parts of butyl acrylate, 16 parts of methyl methacrylate, and 0.3 parts of t-butyl hydroperoxide was continuously added to the contents over 50 minutes to carry out polymerization. After completion of the addition of the mixture, 0.2 parts of sodium formaldehyde sulfoxylate was added to the contents. Thereafter, stirring of the contents was continued for not less than 1 hour while the contents were maintained at 75°C. The polymerization was thus completed. A second polymer (e1-2) capable of covering at least a part of the first polymer (e1-1) was formed by the above operations. Thereafter, the contents were cooled to obtain a latex of a composite containing the first polymer (e1-1) and the second polymer (e1-2), that is, the fluidity improver (E1).

Next, by the same method (operations) as in Production Example 1, a powder of the composite (i.e., the fluidity improver (E1)) was obtained from the latex of the composite (i.e., the fluidity improver (E1)). The weight average molecular weight of the composite (i.e., the fluidity improver (E1)) was measured by the method described above, and was found to be 40,000.

### <Production Example 5>

### (Production of another processing aid (F))

An aqueous solution was prepared by dissolving 0.5 parts of sodium dioctyl succinate, 0.0032 parts of disodium ethylenediaminetetraacetate, and 0.0008 parts of ferrous sulfate in water. The resulting aqueous solution was put in a reactor equipped with a stirrer, and water was further added to adjust the total amount of the aqueous solution to 200 parts.

Gas in the reactor was replaced with nitrogen to remove oxygen from the space portion and from the aqueous solution. Thereafter, while the contents (aqueous solution) were stirred, 0.06 parts of sodium formaldehyde sulfoxylate was put into the reactor equipped with the stirrer, and the contents were heated to 60°C. Thereafter, while stirring of the contents was continued, a mixture of 80 parts of methyl methacrylate and 0.05 parts of t-butyl hydroperoxide was continuously added to the contents over 200 minutes to carry out polymerization. During the polymerization, 0.3 parts of sodium dioctyl sulfosuccinate was added to the contents twice at predetermined timings. A first polymer (f1) was formed by the above operations.

After completion of the polymerization to obtain the first polymer (f1), while the contents were stirred, a mixture of 8 parts of methyl methacrylate, 12 parts of butyl acrylate, and 0.05 parts of t-butyl hydroperoxide was continuously added to the contents over 50 minutes to carry out polymerization. After completion of the addition of the mixture, stirring of the contents was continued for not less than 1 hour while the contents were maintained at 60°C. The polymerization was thus completed. A second polymer (f2) capable of covering at least a part of the first polymer (f1) was formed by the above operations. Thereafter, the contents were cooled to obtain a latex of a composite containing the first polymer (f1) and the second polymer (f2), that is, another processing aid (F), which is a processing aid other than the processing aid (C).

Next, under a temperature condition of 45°C, the resulting latex of the composite (i.e., the other processing aid (F)) was added to 5 parts of an aqueous calcium chloride solution diluted to a concentration of 1% by weight to coagulate the composite (i.e., the other processing aid (F)). Next, heat treatment, dehydration, washing, and drying were carried out to obtain a powder of the composite (i.e., the other processing aid (F)). The weight average molecular weight of the composite (i.e., the other processing aid (F)) was measured by the method described above, and was found to be 750,000.

### [Examples 1 to 13 and Comparative Examples 1 to 3]

According to the makeups indicated in Table 1, the raw materials were mixed at 100°C with a super mixer manufactured by Kawata MFG Co., Ltd. to obtain vinyl chloride-based resin compositions.

Using the resulting vinyl chloride-based resin compositions, extrusion-foamed molded products were produced according to the description in the section <Extrusion molding evaluation>. For each of the extrusion-foamed molded products, the expansion ratio, the moldability, and the appearance were evaluated. The results are indicated in Table 1.

### [Table 1]

**(Table 1)**

| | | | Example 1 | Example 2 | Example 3 | Example 4 |
|---|---|---|---|---|---|---|
| Makeup | Vinyl chloride-based resin (A) | A1 | 50 | 50 | 50 | 50 |
| | | A2 | | | | |
| | Composite containing copolymer (B) | B1 | 50 | 50 | 50 | 50 |
| | Processing aid (C) | C1 | 10 | 12 | 16 | 20 |
| | | C2 | - | - | - | - |
| | | C3 | - | - | - | - |
| | Blowing agent (D) | D1 | 6 | 6 | 6 | 6 |
| | | D2 | - | - | - | - |
| | Fluidity improver (E) | E1 | - | - | - | - |
| | Other additives | F1 | - | - | - | - |
| | | F2 | 2 | 2 | 2 | 2 |
| | | F3 | 0.25 | 0.25 | 0.25 | 0.25 |
| | | F4 | 0.3 | 0.3 | 0.3 | 0.3 |
| | | F5 | 0.3 | 0.3 | 0.3 | 0.3 |
| | Total | | 118.85 | 120.85 | 124.85 | 128.85 |
| Properties | Expansion ratio | | 7.57 | 9.46 | 9.84 | 10.17 |
| | Moldability, appearance | | 1 | 1 | 1 | 2 |

**(Table 1)**

| | | | Example 5 | Example 6 | Example 7 | Example 8 |
|---|---|---|---|---|---|---|
| Makeup | Vinyl chloride-based resin (A) | A1 | 75 | 34 | 50 | 50 |
| | | A2 | - | - | - | - |
| | Composite containing copolymer (B) | B1 | 25 | 66 | 50 | 50 |
| | Processing aid (C) | C1 | 20 | 20 | - | 10 |
| | | C2 | - | - | 20 | 10 |
| | | C3 | - | - | - | - |
| | Blowing agent (D) | D1 | 6 | 6 | 6 | 6 |
| | | D2 | - | - | - | - |
| | Fluidity improver (E) | E1 | - | - | - | - |
| | Other additives | F1 | - | - | - | - |
| | | F2 | 2 | 2 | 2 | 2 |
| | | F3 | 0.25 | 0.25 | 0.25 | 0.25 |
| | | F4 | 0.3 | 0.3 | 0.3 | 0.3 |
| | | F5 | 0.3 | 0.3 | 0.3 | 0.3 |
| | Total | | 128.85 | 128.85 | 128.85 | 128.85 |
| Properties | Expansion ratio | | 6.84 | 10.95 | 10.26 | 10.08 |
| | Moldability, appearance | | 1 | 2 | 1 | 2 |

**(Table 1)**

| | | | Example 9 | Example 10 | Example 11 | Example 12 | Example 13 |
|---|---|---|---|---|---|---|---|
| Makeup | Vinyl chloride-based resin (A) | A1 | 50 | 50 | 50 | 50 | 30 |
| | | A2 | - | - | - | - | 20 |
| | Composite containing copolymer (B) | B1 | 50 | 50 | 50 | 50 | 50 |
| | Processing aid (C) | C1 | - | - | - | - | - |
| | | C2 | 20 | - | 20 | 20 | 20 |
| | | C3 | - | 20 | - | - | - |
| | Blowing agent (D) | D1 | 6 | 6 | - | 10 | 10 |
| | | D2 | - | - | 8 | - | - |
| | Fluidity improver (E) | E1 | 1 | - | - | - | - |
| | Other additives | F1 | - | - | - | - | - |
| | | F2 | 2 | 2 | 2 | 2 | 3 |
| | | F3 | 0.25 | 0.25 | 0.25 | 0.25 | 0.4 |
| | | F4 | 0.3 | 0.3 | 0.3 | 0.3 | 0.3 |
| | | F5 | 0.3 | 0.3 | 0.3 | 0.3 | 0.5 |
| | Total | | 129.85 | 128.85 | 130.85 | 132.85 | 134.20 |
| Properties | Expansion ratio | | 11.11 | 10.90 | 8.34 | 11.01 | 12.01 |
| | Moldability, appearance | | 2 | 1 | 2 | 2 | 1 |

**(Table 1)**

| | | | Comparative Example 1 | Comparative Example 2 | Comparative Example 3 |
|---|---|---|---|---|---|
| Makeup | Vinyl chloride-based resin (A) | A1 A2 | 100 | 50 | 50 |
| | | | - | - | - |
| | Composite containing copolymer (B) | B1 | - | 50 | 50 |
| | Processing aid (C) | C1 | 20 | - | - |
| | | C2 | - | - | - |
| | | C3 | - | - | - |
| | Blowing agent (D) | D1 | 6 | 6 | 6 |
| | | D2 | - | - | - |
| | Fluidity improver (E) | E1 | - | - | - |
| | Other additives | F1 | - | - | 20 |
| | | F2 | 2 | 2 | 2 |
| | | F3 | 0.25 | 0.25 | 0.25 |
| | | F4 | 0.3 | 0.3 | 0.3 |
| | | F5 | 0.3 | 0.3 | 0.3 |
| | Total | | 128.85 | 108.85 | 128.85 |
| Properties | Expansion ratio | | 5.40 | 1.36 | 2.15 |
| | Moldability, appearance | | 1 | 0 | 0 |

A comparison between Example 1 and Comparative Example 2 is as follows. The extrusion-foamed molded product of Example 1 has a high expansion ratio. This shows that the composition of Example 1 has excellent foamability. The extrusion-foamed molded product of Comparative Example 2, which does not contain the processing aid (C), has a low expansion ratio. This shows that the composition of Comparative Example 2 has poor foamability.

A comparison between Example 1 and Comparative Example 3 is as follows. The composition of Comparative Example 3 contains, as a processing aid other than the processing aid (C), a processing aid having a molecular weight of 1,000,000. As a result, the extrusion-foamed molded product of Comparative Example 3 is found to have a poor expansion ratio.

For the processing aid (C), one type may be used alone, or two or more types may be used in combination. In fact, in Example 8, two types of processing aid (C) are used in combination. In Example 8, the extrusion-foamed molded product has a high expansion ratio. This shows that the composition has excellent foamability.

A comparison between Example 7 and Example 9 is as follows. Except that the composition of Example 7 does not contain the fluidity improver (E) whereas the composition of Example 9 contains the fluidity improver (E), the makeup of the composition of Example 7 is the same as the makeup of the composition of Example 9. In Example 9, compared with Example 7, the expansion ratio is high and the moldability and the appearance are excellent.

As the vinyl chloride-based resin (A), a vinyl chloride resin and a chlorinated vinyl chloride resin can also be used in combination. In fact, the composition of Example 13 contains a vinyl chloride resin and a chlorinated vinyl chloride resin that serve as the vinyl chloride-based resin (A). In Example 13, the extrusion-foamed molded product has a high expansion ratio. This shows that the composition has excellent foamability.

### Industrial Applicability

An embodiment of the present invention makes it possible to provide a vinyl chloride-based resin composition capable of providing an extruded foam having a high expansion ratio. Therefore, an embodiment of the present invention can be suitably used, in particular, for interior building materials, bathroom members, ceiling materials, rigid plastic extruded sandwich core materials, internal heat-insulating core materials for resin window sashes, core materials for metal sandwich panels, cushioning materials, heat-insulating materials for bathrooms, and heat-insulating materials for hot-water storage tanks.

## Claims

1. A vinyl chloride-based resin composition for an extrusion-foamed molded product, comprising: a vinyl chloride-based resin (A);
a copolymer (B);
a processing aid (C); and
a blowing agent (D),
the copolymer (B) containing 20% by weight to 85% by weight of α-methylstyrene units as a structural unit with respect to 100% by weight of the copolymer (B), and having a glass transition temperature of not less than 90°C,
the copolymer (B) being contained in an amount of 5.0 parts by weight to 75.0 parts by weight with respect to a total of 100 parts by weight of the vinyl chloride-based resin (A) and the copolymer (B),
the processing aid (C) containing (i) a (meth)acrylic polymer and/or (ii) a copolymer having aromatic vinyl units and unsaturated nitrile units as structural units,
the processing aid (C) having a weight average molecular weight of 1,500,000 to 8,000,000,
the processing aid (C) being contained in an amount of 5.0 parts by weight to 30.0 parts by weight with respect to a total of 100 parts by weight of the vinyl chloride-based resin (A) and the copolymer (B).

2. The vinyl chloride-based resin composition for an extrusion-foamed molded product according to claim 1, wherein an average degree of polymerization of the vinyl chloride-based resin (A) is 400 to 1,300.

3. The vinyl chloride-based resin composition for an extrusion-foamed molded product according to claim 1, wherein when the vinyl chloride-based resin composition further comprises a carrier (B), a composite (B) which contains the copolymer (B) and the carrier (B) has a weight average molecular weight of 20,000 to 800,000, and
when the vinyl chloride-based resin composition does not comprise the carrier (B),
the copolymer (B) has a weight average molecular weight of 20,000 to 800,000.

4. The vinyl chloride-based resin composition for an extrusion-foamed molded product according to claim 1, wherein the blowing agent (D) is a chemical blowing agent.

5. The vinyl chloride-based resin composition for an extrusion-foamed molded product according to claim 1, wherein the vinyl chloride-based resin (A) contains a chlorinated vinyl chloride-based resin.

6. An extrusion-foamed molded product obtained by extrusion-foaming the vinyl chloride-based resin composition for an extrusion-foamed molded product according to any one of claims 1 to 5.
